# FASCICULE DE BREVET EUROPEEN

(11) **EP 1 125 671 B1**
(45) Date de publication et mention de la délivrance du brevet: **10.08.2005**
(21) Numéro de dépôt: 01400191.1
(22) Date de dépôt: 24.01.2001
(51) Int. Cl.: B23K 10/00

(54) **Pilotage de l'envoi du gaz de coupage plasma à partir de la pression du gaz pilote**
Steuerung der Strömung des Schneidplasmagases durch den Zündgasdruck
Plasma cutting gas flowing control using the pressure of the pilot gas

(30) Priorité: 18.02.2000 FR 0002025
(43) Date de publication de la demande: 22.08.2001
(73) Titulaire: Safmatic, 79201 Parthenay Cedex (FR)
(72) Inventeur: Billerot, Francis, 79450 Saint Aubin le Cloud (FR)
(74) Mandataire: Pittis, Olivier

(56) Documents cités:
- DE-A- 19 536 150
- FR-A- 2 237 720
- US-A- 5 290 995
- US-A- 5 844 201

## Description

La présente invention concerne une installation automatique de coupage ou de soudage par jet de gaz conformément au préambule de la revendication 1 et décrit aussi un procédé de coupage ou de soudage conformément au préambule de la revendication 10 (voir, par exemple, 455 844 201.

Le coupage à l'arc plasma de matériau métallique, telles des tôles d'aciers, au moyen d'une torche délivrant un jet de plasma est un procédé très répandu au plan industriel.

Habituellement, une opération de coupage, par exemple, d'une tôle d'acier se décompose en deux phases distinctes, à savoir une phase d'amorçage et une phase de coupage proprement dit.

Durant la phase d'amorçage, un gaz d'amorçage, encore appelé gaz pilote, est utilisé pour amorcer, c'est-à-dire allumer, l'arc électrique dans la torche.

Plus précisément, le gaz pilote est ionisé au sein de la torche et il se forme un arc électrique au sein de ladite torche, appelé arc pilote.

Ensuite, durant la phase de coupe, la torche est alimentée avec un gaz principal encore appelé gaz de coupe ayant un débit, en général, de l'ordre de 10 à 500 l/min, lequel gaz de coupe est ionisé dans l'arc électrique qui se forme entre l'électrode de la torche à plasma, faisant office de cathode, et la pièce à découper, faisant office d'anode.

Selon le cas, le gaz pilote peut être identique ou différent du gaz de coupe, par exemple on peut utiliser de l'argon en tant que gaz pilote et de l'oxygène, de l'azote ou un mélange gazeux, tel un mélange argon/hydrogène, en tant que gaz de coupe.

Cependant, dans tous les cas, la phase d'amorçage et la phase de coupage ou soudage sont exécutées l'une après l'autre et dans cet ordre.

En général, les débits du gaz pilote et du gaz de coupe, respectivement, sont fixés aux niveaux souhaités par réglage de la pression de ces gaz.

Par ailleurs, les circuits de gaz pilote et de gaz de coupe sont, le plus souvent, indépendant l'un de l'autre et la commande de la torche de coupage est, de plus en plus souvent contrôlée par des moyens de pilotage automatiques, notamment des moyens de pilotage à carte à microprocesseur mettant en oeuvre un ou des programmes informatiques.

Ainsi, le document US-A-5,844,201 décrit une installation de soudage automatique avec torche alimentée en fil fusible et en mélanges de gaz. Les différents gaz peuvent être introduits dans la torche indépendamment les uns des autres, grâce à plusieurs lignes de gaz aménagées en parallèle et sur lesquelles sont aménagées des électrovannes servant à contrôler le passage des différents gaz dans ces lignes de gaz.

Or, pour certains types de gaz, tels l'oxygène ou l'hydrogène, il n'est pas possible ou recommandé d'utiliser, pendant la phase de coupe, des dispositifs de détentes commandés électriquement et ce, pour des raisons évidentes de sécurité.

Dès lors, pour ce type de gaz, les dispositifs de détente ou détendeur pouvant être mis en oeuvre sont le plus souvent de type à réglage manuel ou, selon le cas, les détendeurs pilotés à distánce par un gaz neutre ou inerte, tels l'azote ou l'argon, ce qui permet de pallier le problème de sécurité précité mais nécessite la présence d'une source complémentaire de gaz de pilotage.

A l'inverse, la phase d'amorçage de la torche est habituellement réalisée avec un gaz neutre à fort pouvoir d'ionisation, tel l'argon, avec lequel l'emploi de détendeur piloté électriquement ne pose, par contre, pas de problème de sécurité.

Cependant, on assiste à une demande croissante pour des dispositifs de réglage simultané et automatique de la pression du gaz pilote et du gaz de coupe, de manière automatique, par exemple à partir d'un même pupitre opérateur ou par l'intermédiaire de tables de paramètre incluses dans des systèmes informatiques, par exemple des commandes numériques.

En effet, étant donné que les réglages des pressions du gaz pilote et du gaz de coupe dépend, en particulier, des tôles à découper, c'est-à-dire du type de matériau, de son épaisseur, de sa forme géométrique..., il est habituellement difficile pour un opérateur de trouver rapidement et sûrement les paramètres adéquats de réglage de la pression de ces deux gaz.

En d'autres termes, le problème qui se pose est celui de pouvoir régler la pression du gaz de coupe et la pression du gaz d'amorçage de manière automatique, en toute sûreté quel que soit le type de gaz mis en oeuvre et sans utiliser une source extérieure de gaz de pilotage des détendeurs agencés sur les lignes ou circuits véhiculant, d'une part, le gaz pilote et, d'autre part, le gaz de coupe.

La solution apportée par la présente invention repose sur un pilotage du détendeur agencé sur le circuit de gaz de coupe directement à partir de la pression du gaz pilote circulant dans le circuit de gaz pilote.

En d'autres termes, la présente invention porte sur une installation automatique de soudage ou de coupage par jet de gaz de coupage ou de soudage, notamment par jet de plasma, comprenant au moins
- une torche de coupage par jet de gaz, de préférence une torche à plasma ;
- une première ligne d'alimentation de ladite torche en un gaz pilote ;
- un deuxième ligne d'alimentation de ladite torche en un gaz de coupage ou de soudage ;
- des moyens de pilotage ;
- des premiers moyens de régulation de la pression du gaz pilote circulant dans la première ligne, lesdits premiers moyens de régulation étant agencés sur la première ligne et étant commandés par les moyens de pilotage ;
- des deuxième moyens de régulation de la pression du gaz de coupage ou de soudage circulant dans la deuxième ligne ;
caractérisée en ce qu'elle comporte, en outre, une ligne de pilotage pneumatique reliant pneumatiquement la première ligne aux deuxième moyens de régulation, ladite ligne de pilotage étant reliée à la première ligne en aval des premiers moyens de régulation, pour permettre un réglage de la pression du gaz de coupage ou de soudage dans la deuxième ligne à partir de la pression du gaz pilote dans la première ligne, en agissant sur lesdits deuxième moyens de régulation, lesdits deuxième moyens de régulation étant choisis parmi les moyens de régulation de pression à commande pneumatique.

Selon un autre aspect, la présente invention concerne également un procédé de coupage ou de soudage par jet de gaz de coupage ou de soudage, de préférence un procédé de coupage plasma, dans lequel on met en oeuvre une torche à plasma alimentée en un gaz pilote par une première ligne d'alimentation et alimentée en un gaz de coupage ou de soudage par une deuxième ligne d'alimentation, des moyens de pilotage commandant des premiers moyens de régulation de la pression du gaz pilote circulant dans la première ligne agencés sur la première ligne, et des deuxième moyens de régulation de la pression du gaz de coupage ou de soudage circulant dans la deuxième ligne, en particulier susceptible d'être mis en oeuvre par une installation selon l'invention, caractérisé en ce qu'on pilote les moyens de régulation du gaz de coupage ou de soudage de manière pneumatique à partir de la pression du gaz pilote au moyen d'une ligne de pilotage pneumatique reliant pneumatiquement la première ligne d'alimentation en aval des premier moyens de régulation aux deuxième moyens de régulation, pour permettre un réglage de la pression du gaz de coupage ou de soudage dans la deuxième ligne à partir de la pression du gaz pilote dans la première ligne, en agissant sur lesdits deuxième moyens de régulation, lesdits deuxième moyens de régulation étant choisis parmi les moyens de régulation de pression à commande pneumatique, c'est-à-dire les détendeurs à commande pneumatique.

La présente invention va maintenant être décrite plus en détail à l'aide des figures annexées, données à titre illustratif mais non limitatif.

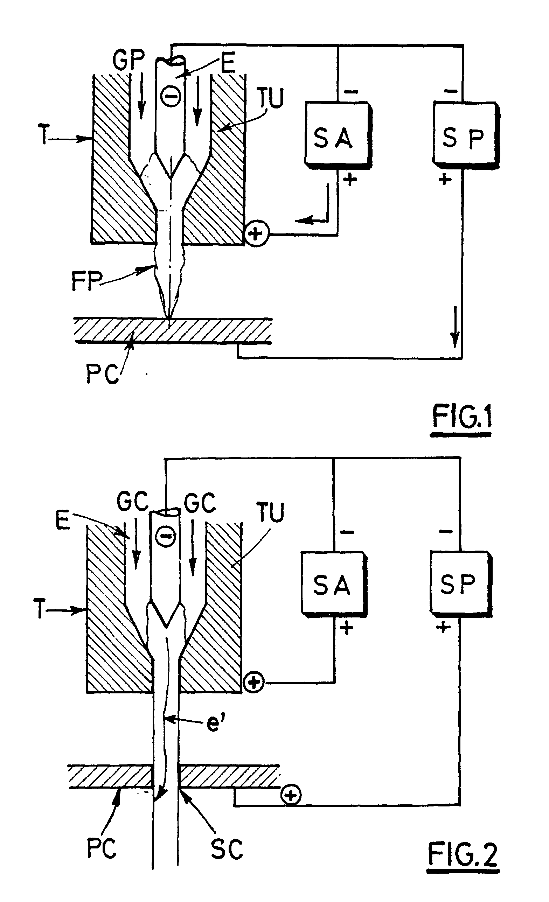

Les figures 1 et 2 schématisent respectivement, la phase d'amorçage (fig. 1) et la phase de coupe (fig. 2) se succédant durant une opération de coupage à l'arc plasma d'une pièce à couper PC, par exemple une tôle d'acier.

Sur la figure 1, on voit que, durant la phase d'amorçage de l'arc pilote, il s'opère un transfert d'électrons et l'apparition d'un ou plusieurs arc pilote entre l'électrode E de la torche T à plasma et la tuyère TU de ladite torche T à plasma.

Durant cette phase d'amorçage de l'arc pilote, la torche T à plasma est alimentée en gaz pilote GP, par exemple de l'argon, de manière à obtenir un flux plasmagène FP délivré par la torche T en direction de la pièce à couper PC.

En outre, durant cette phase d'amorçage, la torche T est alimentée en courant électrique uniquement par une source auxiliaire SA de courant électrique, par exemple d'un courant d'une tension de 100 V et d'une intensité de 15 A, alors que, durant cette phase d'amorçage, la source principale SP de courant électrique ne fonctionne pas (U = 0 V, I = 0 A).

Par ailleurs, la figure 2 schématise la phase de coupe succédant à la phase d'amorçage représentée sur la figure 1. Plus précisément, sur la fig. 2, durant la phase de coupe, le gaz pilote est remplacé par un gaz de coupe qui peut être de même nature ou de nature différente du gaz pilote, par exemple de l'oxygène ou un mélange d'argon et d'hydrogène.

De plus, durant la phase de coupe, on constate qu'il apparaît un flux d'électrons entre l'électrode E et la pièce à couper PC jusqu'à obtenir un perçage et un coupage selon une saignée de coupe SC de ladite pièce à couper PC.

Durant la phase de coupe, la source auxiliaire SA de courant électrique est arrêtée (U = 0 V; I = 0 A) alors que la source principale SP de courant électrique délivre un courant ayant une intensité et une tension variable en fonction de l'épaisseur de la pièce à couper, par exemple une tension comprise entre 100 et 300 V et une intensité comprise entre 15 et 1 000 A.

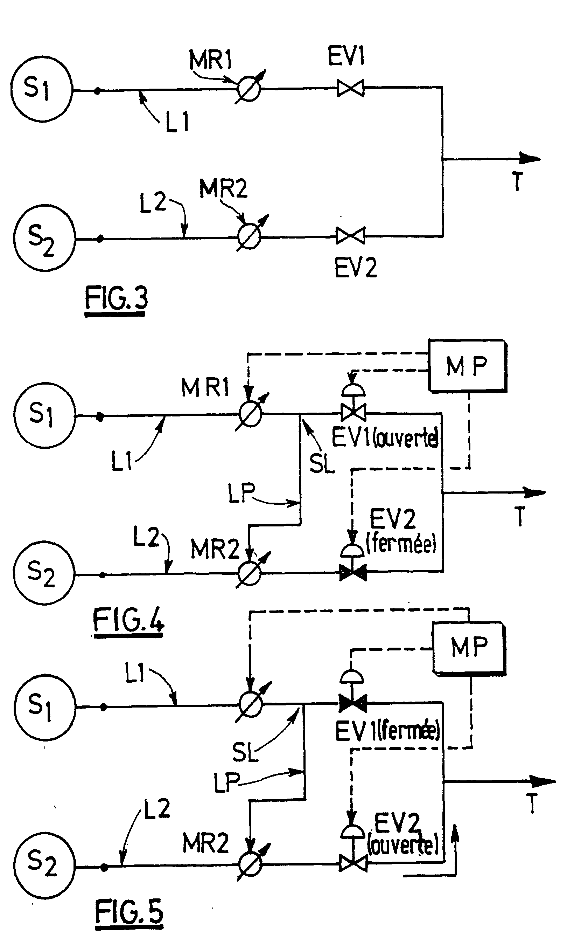

La figure 3 schématise quant à elle, le système d'alimentation d'une torche T à plasma alimentée en gaz pilote et en gaz de coupe par l'intermédiaire de deux circuits de gaz différents et indépendants l'un de l'autre.

Plus précisément, le circuit de gaz pilote comporte une ligne L1 d'alimentation en gaz pilote reliée, en amont, à une source S1 de gaz pilote et, en aval, à la torche à plasma T, et sur laquelle ligne L1 sont agencée, d'une part, des moyens de réglage MR1 manuels de la pression de gaz pilote et une électrovanne EV1 commandant l'envoi dudit gaz pilote à la torche T à plasma.

De manière analogue, le circuit de gaz de coupe comprend une ligne L2 de gaz de coupe relié, en amont, à une source S2 de gaz de coupe et, en aval, à la torche T à plasma, et sur laquelle ligne L2 sont agencée, d'une part, des moyens de réglage manuel de la pression de gaz de coupe MR2 et une électrovanne EV2 contrôlant l'envoi du gaz de coupe vers la torche T à plasma.

Ce type de système connu de l'art antérieur présente plusieurs désavantages, notamment celui de nécessiter un réglage manuel de la pression du gaz pilote et de la pression du gaz de coupe par action direct de l'opérateur sur les moyens de réglage MR1 et MR2, respectivement.

Les figures 4 et 5 représentent le schéma d'un système d'alimentation d'une torche T à plasma en un gaz pilote et en un gaz de coupe, respectivement, conforme à la présente invention.

Plus précisément, la figure 4 schématise le fonctionnement du système d'alimentation en gaz pilote et en gaz de coupe durant la phase d'amorçage, alors que la figure 5 représente le fonctionnement du système d'alimentation durant la phase de coupe.

Sur la figure 4, on voit que, durant la phase d'amorçage, le gaz pilote est acheminé, par la ligne L1, jusqu'à la torche T à plasma, étant donné que l'électrovanne EV1 commandée par les moyens de pilotage MP est en position ouverte, c'est-à-dire qu'elle autorise le passage du gaz pilote vers la torche T et que, d'autre part, l'électrovanne EV2 à commande électrique ou pneumatique est elle, en position fermée, interdisant alors le passage du gaz de coupe vers la torche T.

La régulation de la pression du gaz pilote dans la ligne L1 de gaz pilote se fait par le biais de moyens de régulation de pression MR1 à commande électrique, par exemple un détendeur à commande électrique commandée par les moyens de pilotage MP.

Par contre, la pression du gaz de coupe dans la ligne L2 d'alimentation en gaz de coupe est réalisée, dans ce cas, par des moyens de régulation MR2 de pression à commande pneumatique, lesquels sont pilotés par la pression du gaz pilote dans la ligne L1 de gaz pilote.

En effet, la ligne L1 de gaz pilote comporte une dérivation ou ligne de pilotage pneumatique LP, reliée à la ligne L1 de gaz pilote en un site de liaison SL situé en aval des moyens de régulation MR1 mais en amont de l'électrovanne EV1.

De cette manière, les moyens de pilotage MP en agissant sur les moyens de régulation MR1 de la pression du gaz de pilote engendrent une première pression P1 du gaz pilote en aval desdits moyens de régulation MR1, en particulier dans la ligne de pilotage LP pneumatique, laquelle première pression P1 va agir sur les moyens de régulation MR2 de la pression de gaz de coupe pour fixer le niveau de pression PX de gaz de coupe souhaité lorsque le débit dudit gaz de coupe est nul (EV2 étant en position fermée).

Ensuite, ainsi que représenté sur la figure 5, lors de la phase de coupe, le processus s'inverse, c'est-à-dire que les moyens de pilotage commandent l'électrovanne EV1 qui se ferme et interdit, par là même, le passage du gaz pilote vers la torche T à plasma et commandent, en outre, l'électrovanne EV2 qui s'ouvre et autorise le passage du gaz de coupe vers la torche T.

En outre, les moyens de pilotage agissent également sur les moyens de régulation MR1 de la pression du gaz pilote de manière à fixer la pression du gaz pilote à un deuxième niveau de pression P2, ce qui engendre une variation de pression au sein de la ligne de pilotage LP pneumatique, laquelle variation de pression agit par ricoché sur les moyens de régulation MR2 de la pression de gaz de coupe, lesquels sont alors commandés pour ajuster la pression du gaz de coupe à une pression et à un débit de gaz de coupe souhaité.

On comprend donc que le dispositif selon la présente invention permet d'utiliser, en tant que gaz de coupe, tout type de gaz notamment les gaz susceptibles de poser des problèmes de sécurité, tels l'oxygène ou l'hydrogène, étant donné que, selon l'invention, les moyens de régulation de la pression du gaz de coupe sont à commande pneumatique ce qui évite tout danger, étant donné que le moyen de régulation de pression MR2 du gaz de coupe n'est pas à pilotage électrique.

En d'autres termes, selon la présente invention, il est possible de contrôler le débit et la pression de deux gaz différents, à savoir un gaz pilote et un gaz de coupe, nécessitant des réglages de pression et de débit différents l'un de l'autre, avec une seule ligne de consigne électrique réglable.

La présente invention est applicable sur les machines automatiques de coupage mettant en oeuvre une torche à plasma ou un chalumeau d'oxycoupage, mais aussi sur une machine automatique mettant en oeuvre une torche ou un chalumeau de soudage ou, plus généralement, sur tout type de machine de distribution de gaz à grand débit, en particulier d'oxygène et/ou d'hydrogène, nécessitant un enchaînement de pression de gaz différents à partir d'une seule et même origine de consigne électrique.

## Revendications

1. Installation automatique de coupage ou de soudage par jet de gaz, en particulier de coupage par jet de plasma, comprenant au moins :
- une torche (T) de coupage ou de soudage;
- une première ligne (L1) d'alimentation de ladite torche (T) en un gaz pilote ;
- une deuxième ligne (L2) d'alimentation de ladite torche (T) en un gaz de coupage ou de soudage ;
- des moyens de pilotage (MP) ;
- des premiers moyens de régulation (MR1) de la pression du gaz pilote circulant dans la première ligne (L1), lesdits premiers moyens de régulation (MR1) étant agencés sur la première ligne (L1) et étant commandés par les moyens de pilotage (MP) ;
- des deuxième moyens de régulation (MR2) de la pression du gaz de coupage ou de soudage circulant dans la deuxième ligne (L2) ;
**caractérisée en ce qu'**elle comporte, en outre, une ligne de pilotage (LP) pneumatique reliant pneumatiquement la première ligne (L1) aux deuxième moyens de régulation (MR2), ladite ligne de pilotage (LP) étant reliée à la première ligne (L1) en aval des premiers moyens de régulation (MR1), pour permettre un réglage de la pression du gaz de coupage ou de soudage dans la deuxième ligne (L2) à partir de la pression du gaz pilote dans la première ligne (L1), en agissant sur lesdits deuxième moyens de régulation (MR2), lesdits deuxième moyens de régulation (MR2) étant choisis parmi les moyens de régulation de pression à commande pneumatique.

2. Installation selon la revendication 1, **caractérisée en ce que** les premiers moyens de régulation (MR1) sont à commande électrique.

3. Installation selon l'une des revendications 1 ou 2, **caractérisée en ce que** les moyens de pilotage (MP) sont choisis parmi les systèmes à commande numérique.

4. Installation selon la revendication 2, **caractérisée en ce que** les premier moyens de régulation (MR1) sont choisis parmi les détendeurs à commande électrique.

5. Installation selon l'une des revendications 1 à 4, **caractérisée en ce qu'**au moins une électrovanne (EV1, EV2) est agencée sur la première ligne (L1) et/ou la deuxième ligne (L2).

6. Installation selon l'une des revendications 1 à 5, **caractérisée en ce qu'**au moins une électrovanne (EV1, EV2) est commandée par les moyens de pilotage (MP).

7. Installation selon la revendication 5, **caractérisée en ce qu'**au moins une électrovanne (EV1, EV2) est agencée sur chacune desdites première et deuxième lignes (L1, L2).

8. Installation selon l'une des revendications 1 à 7, **caractérisée en ce que** la torche (T) est une torche de coupage par jet de plasma ou un chalumeau d'oxycoupage.

9. Installation selon l'une des revendications 1 à 8, **caractérisée en ce que** la première ligne (L1) d'alimentation est alimentée en gaz pilote issu d'au moins une source de gaz pilote (S1) et **en ce que** la deuxième ligne (L2) d'alimentation est alimentée en gaz de coupage ou de soudage issu d'au moins une source de gaz de coupage ou de soudage (S2).

10. Procédé de coupage ou soudage, de préférence un procédé de coupage plasma, dans lequel on met en oeuvre une torche à plasma alimentée en un gaz pilote par une première ligne (L1) d'alimentation et alimentée en un gaz de coupage ou de soudage par une deuxième ligne (L2) d'alimentation, des moyens de pilotage (MP) commandant des premiers moyens de régulation (MR1) de la pression du gaz pilote circulant dans la première ligne (L1) agencés sur la première ligne (L1), et des deuxième moyens de régulation (MR2) de la pression du gaz de coupage ou de soudage circulant dans la deuxième ligne (L2), mis en oeuvre par une installation selon l'une des revendications 1 à 9, **caractérisé en ce qu'**on pilote les moyens de régulation du gaz de coupage ou de soudage (MR2) de manière pneumatique à partir de la pression du gaz pilote au moyen d'une ligne de pilotage (LP) pneumatique reliant pneumatiquement la première ligne (L1) d'alimentation en aval des premier moyens de régulation (MR1) aux deuxième moyens de régulation (MR2), pour permettre un réglage de la pression du gaz de coupage ou de soudage dans la deuxième ligne (L2) à partir de la pression du gaz pilote dans la première ligne (L1), en agissant sur lesdits deuxième moyens de régulation (MR2), lesdits deuxième moyens de régulation (MR2) étant choisis parmi les moyens de régulation de pression à commande pneumatique.

## Patentansprüche

1. Automatische Schneid- oder Schweißanlage mittels Gasstrahl, insbesondere zum Schneiden mittels Plasmastrahl, die mindestens aufweist:
- eine Schneid- oder Schweißfackel (T);
- eine erste Leitung (L1) zur Speisung der Fackel (T) mit einem Pilotgas;
- eine zweite Leitung (L2) zur Speisung der Fackel (T) mit einem Schneid- oder Schweißgas;
- Steuermittel (MP);
- erste Regelmittel (MR1) für den Druck des in der ersten Leitung (L1) strömenden Pilotgases, wobei die ersten Regelmittel (MR1) auf der ersten Leitung (L1) angeordnet sind und von den Steuermitteln (MP) gesteuert werden;
- zweite Regelmittel (MR2) für den Druck des in der zweiten Leitung (L2) strömenden Schneid- oder Schweißgases;
**dadurch gekennzeichnet, dass** sie außerdem eine pneumatische Steuerleitung (LP) aufweist, die die erste Leitung (L1) pneumatisch mit den zweiten Regelmitteln (MR2) verbindet, wobei die Steuerleitung (LP) mit der ersten Leitung (L1) stromabwärts hinter den ersten Regelmitteln (MR1) verbunden ist, um eine Regelung des Drucks des Schneid- oder Schweißgases in der zweiten Leitung (L2) ausgehend vom Druck des Pilotgases in der ersten Leitung (L1) zu ermöglichen, indem auf die zweiten Regelmittel (MR2) eingewirkt wird, wobei die zweiten Regelmittel (MR2) unter den Druckregelmitteln mit pneumatischer Steuerung ausgewählt werden.

2. Anlage nach Anspruch 1, **dadurch gekennzeichnet, dass** die ersten Regelmittel (MR1) elektrisch gesteuert werden.

3. Anlage nach einem der Ansprüche 1 oder 2, **dadurch gekennzeichnet, dass** die Steuermittel (MP) unter den Systemen mit digitaler Steuerung ausgewählt werden.

4. Anlage nach Anspruch 2, **dadurch gekennzeichnet, dass** die ersten Regelmittel (MR1) unter den elektrisch gesteuerten Druckminderventilen ausgewählt werden.

5. Anlage nach einem der Ansprüche 1 bis 4, **dadurch gekennzeichnet, dass** mindestens ein Elektroventil (EV1, EV2) auf der ersten Leitung (L1) und/oder der zweiten Leitung (L2) angeordnet ist.

6. Anlage nach einem der Ansprüche 1 bis 5, **dadurch gekennzeichnet, dass** mindestens ein Elektroventil (EV1, EV2) von den Steuermitteln (MP) gesteuert wird.

7. Anlage nach Anspruch 5, **dadurch gekennzeichnet, dass** mindestens ein Elektroventil (EV1, EV2) je auf der ersten bzw. der zweiten Leitung (L1, L2) angeordnet ist.

8. Anlage nach einem der Ansprüche 1 bis 7, **dadurch gekennzeichnet, dass** die Fackel (T) eine Plasmaschneidfackel oder ein Autogen-Schneidbrenner ist.

9. Anlage nach einem der Ansprüche 1 bis 8, **dadurch gekennzeichnet, dass** die erste Speiseleitung (L1) mit Pilotgas gespeist wird, das von mindestens einer Pilotgasquelle (S1) stammt, und dass die zweite Speiseleitung (L2) mit Schneidgas oder Schweißgas gespeist wird, das von mindestens einer Schneidgas- oder Schweißgasquelle (S2) stammt.

10. Schneid- oder Schweißverfahren, vorzugsweise ein Plasmaschneidverfahren, bei dem eine Plasmafackel, die über eine erste Speiseleitung (L1) mit einem Pilotgas und über eine zweite Speiseleitung (L2) mit einem Schneid- oder Schweißgas gespeist wird, Steuermittel (MP), die erste Regelmittel (MR1) für den Druck des in der ersten Leitung (L1) strömenden Pilotgases steuern und auf der ersten Leitung (L1) angeordnet sind, und zweite Regelmittel (MR2) für den Druck des in der zweiten Leitung (L2) strömenden Schneid- oder Schweißgases verwendet werden, das von einer Anlage gemäß einem der Ansprüche 1 bis 9 angewandt wird, **dadurch gekennzeichnet, dass** die Regelmittel (MR2) des Schneid- oder Schweißgases ausgehend vom Druck des Pilotgases mittels einer pneumatischen Steuerleitung (LP) pneumatisch gesteuert werden, die die erste Speiseleitung (L1) stromabwärts hinter den ersten Regelmitteln (MR1) pneumatisch mit den zweiten Regelmitteln (MR2) verbindet, um eine Regelung des Drucks des Schneid- oder Schweißgases in der zweiten Leitung (L2) ausgehend vom Druck des Pilotgases in der ersten Leitung (L1) zu ermöglichen, indem auf die zweiten Regelmittel (MR2) eingewirkt wird, wobei die zweiten Regelmittel (MR2) unter den Druckregelmitteln mit pneumatischer Steuerung ausgewählt werden.

## Claims

1. Automatic plant for cutting and welding by a gas jet, in particular for cutting by a plasma jet, which comprises at least:
- a cutting or welding torch (T);
- a first line (L1) for supplying said torch (T) with a pilot gas;
- a second line (L2) for supplying said torch (T) with a cutting or welding gas;
- control means (MP);
- first means (MR1) for regulating the pressure of the pilot gas flowing in the first line (L1), said first regulating means (MR1) being fitted in the first line (L1) and being controlled by the control means (MP);
- second means (MR2) for regulating the pressure of the cutting or welding gas flowing in the second line (L2);
**characterized in that** it further comprises a pneumatic control line (LP) pneumatically connecting the first line (L1) to the second regulating means (MR2), the said control line (LP) being connected to the first line (L1) downstream of the first regulating means (MR1), in order to enable the pressure of the cutting or welding gas in the second line (L2) to be adjusted on the basis of the pressure of the pilot gas in the first line (L1) by acting on said second regulating means (MR2), said second regulating means (MR2) being chosen from pneumatically-controlled pressure-regulating means.

2. Plant according to Claim 1, **characterized in that** the first regulating means (MR1) are electrically controlled.

3. Plant according to either of Claims 1 and 2, **characterized in that** the control means (MP) are chosen from numerical control systems.

4. Plant according to Claim 2, **characterized in that** the first regulating means (MR1) are chosen from electrically-controlled pressure-reducing valves.

5. Plant according to one of Claims 1 to 4, **characterized in that** at least one solenoid valve (EV1, EV2) is fitted in the first line (L1) and/or the second line (L2).

6. Plant according to one of Claims 1 to 5, **characterized in that** at least one solenoid valve (EV1, EV2) is controlled by the control means (MP).

7. Plant according to Claim 5, **characterized in that** at least one solenoid valve (EV1, EV2) is fitted in each of said first and second lines (L1, L2).

8. Plant according to one of Claims 1 to 7, **characterized in that** the torch (T) is a torch for cutting by plasma jet or an oxycutting torch.

9. Plant according to one of Claims 1 to 8, **characterized in that** the first supply line (L1) is supplied with pilot gas from at least one source of pilot gas (S1) and **in that** the second supply line (L2) is supplied with cutting or welding gas from at least one source of cutting or welding gas (S2).

10. Cutting or welding process, preferably a plasma cutting process, in which a plasma torch supplied with a pilot gas via a first supply line (L1) and supplied with a cutting or welding gas via a second supply line (L2), control means (MP) for controlling the first means (MR1) for regulating the pressure of the pilot gas flowing in the first line (L1), the first regulating means being fitted in the first line (L1), and second means (MR2) for regulating the pressure of the cutting or welding gas flowing in the second line (L2) are employed, said process being implemented by a plant according to one of Claims 1 to 9, **characterized in that** the regulating means for the cutting or welding gas (MR2) are pneumatically controlled on the basis of the pressure of the pilot gas by means of a pneumatic pilot line (LP) pneumatically connecting the first supply line (L1) downstream of the first regulating means (MR1) to the second regulating means (MR2), in order to enable the pressure of the cutting or welding gas in the second line (L2) to be adjusted on the basis of the pressure of the pilot gas in the first line (L1) by acting on said second regulating means (MR2), said second regulating means (MR2) being chosen from pneumatically-controlled pressure-regulating means.
